# FASCICULE DE BREVET EUROPEEN

(11) **EP 3 044 738 B1**
(45) Date de publication et mention de la délivrance du brevet: **01.11.2017**
(21) Numéro de dépôt: 14784268.6
(22) Date de dépôt: 10.09.2014
(51) Int. Cl.: G06K 19/077

(54) **CARTE A MICROCIRCUIT A MOYEN DE CONTACT EN SPIRALE CENTRIFUGE**
MIKROSCHALTPLATTE MIT EINEM ZENTRIFUGALEN SPIRALFÖRMIGEN KONTAKTMITTEL
MICROCIRCUIT BOARD HAVING A CENTRIFUGAL SPIRAL CONTACT MEANS

(30) Priorité: 12.09.2013 FR 1358772
(43) Date de publication de la demande: 20.07.2016
(73) Titulaire: Oberthur Technologies, 92700 Colombes (FR)
(72) Inventeur: GRAGNIC, Elodie, F-92700 Colombes (FR); BOSQUET, Olivier, F-92700 Colombes (FR)
(74) Mandataire: Perrot, Emilie
(86) Numéro de dépôt international: PCT/FR2014/052234
(87) Numéro de publication internationale: WO 2015/036690

(56) Documents cités:
- EP-A1- 2 273 425
- US-A1- 2008 283 615

## Description

La présente invention se situe dans le domaine des cartes à microcircuit et plus particulièrement celles comportant au moins une antenne. Il est traité le problème de la connexion électrique du microcircuit avec une antenne incrustée dans le corps de la carte.

Un microcircuit comprend un microcontrôleur et de la mémoire. Cette mémoire est sécurisée en ce qu'elle ne peut être accédée que via le microcontrôleur.

Aussi, les cartes à microcircuit sont couramment utilisées comme carte bancaire, carte d'identité, carte de fidélité, carte d'assuré social ou encore comme carte d'abonnement téléphonique.

Il est connu de réaliser une carte à microcircuit en assemblant un corps en plastique, servant de support avec un module comprenant un microcircuit. Pour cela un lamage est réalisé dans le corps, dans lequel vient prendre place le module.

Afin de pouvoir dialoguer avec l'extérieur, un microcircuit doit pouvoir s'interfacer avec un lecteur. Ceci peut se faire avec ou sans contact. Un microcircuit peut être à contact et comprend une plaque de contact électriquement connectée au microcircuit, typiquement disposée à la surface du module de manière à se retrouver à la surface de la carte, où elle peut être en contact avec des palpeurs d'un lecteur. Un microcircuit peut encore être sans contact. Une antenne est alors électriquement connectée au microcircuit. Un lecteur comprend alors une antenne homologue. Un microcircuit peut offrir les deux modes d'interface, avec et sans contact. Il est alors appelé dual et comprend une plaque de contact et une antenne.

Selon un mode de réalisation une telle antenne est incrustée dans le corps plastique et réalisée avec ce dernier. Aussi, afin de pouvoir être électriquement connectée au microcircuit, l'antenne comprend, typiquement des moyens de contacts. Ces moyens de contacts sont conformés pour déboucher dans le lamage prévu pour accueillir le module afin de permettre au microcircuit de s'y connecter.

Selon un mode de réalisation classique, un moyen de contact comprend une plaque conductrice, typiquement en cuivre. Une telle plaque de cuivre est soudée à chaque extrémité de l'antenne et est incrustée, avec l'antenne, lors de la réalisation du corps. Un tel moyen de contact est disposé dans le corps au niveau du lamage. Ainsi, l'usinage du corps qui réalise le lamage met à jour le moyen de contact. Avantageusement encore ce même usinage réalise un décapage superficiel de la plaque afin de préparer la future connexion électrique.

Du fait du volume de cuivre important de la plaque, un tel moyen de contact entraine des coûts importants. Aussi, des solutions moins onéreuses sont recherchées.

US 2008/283615 propose de prolonger le fil d'antenne au niveau du moyen de contact et de le conformer en repliant le fil sur lui-même en accordéon, afin de simuler une plaque de contact. Une telle solution n'est cependant pas optimale et il est possible de l'améliorer.

L'invention a pour objet une carte à microcircuit comprenant un corps en plastique, un module comprenant un microcircuit, une antenne incrustée dans le corps et reliée au microcircuit par au moins un moyen de contact, ledit au moins un moyen de contact comprenant un fil conducteur s'étend entre une première extrémité solidaire de l'antenne et une deuxième extrémité libre, au moins une partie du fil conducteur est agencée en spirale centrifuge enroulée entre un centre, relié à la première extrémité, et un point éloigné du centre, le point éloigné étant relié à la deuxième extrémité libre.

Grâce à ces dispositions, le fil conducteur est connecté à l'antenne par le centre de la spirale, ce qui diminue le risque de déconnexion par arrachement des fils périphériques de la spire lors de l'arrivée de l'outil d'usinage.

Selon une autre caractéristique, la carte à microcircuit comprend encore un lamage apte à accueillir le module, la spirale affleurant, au moins partiellement, à une surface du lamage.

Selon une autre caractéristique, la spirale est en partie noyée dans le corps, préférentiellement de telle manière à ce que le centre de la spirale soit disposé au-delà du lamage et soit noyé dans le corps et qu'une partie du moyen de contact soit accessible depuis le lamage.

Selon une autre caractéristique, une partie du moyen de contact comprise entre la première extrémité et le centre de la spirale est disposée sous la spirale, au delà du lamage (11) .

Selon une autre caractéristique, la spirale est sensiblement plane et sensiblement rectangulaire.

Selon une autre caractéristique, la spirale est en partie noyée dans le corps, préférentiellement de telle manière à ce que le centre de la spirale soit noyé dans le corps et qu'une partie du moyen de contact soit accessible depuis le lamage.

Selon une autre caractéristique, l'antenne est composée d'un fil conducteur et au moins une de ses extrémités se confond avec la première extrémité (8) du moyen de contact.

Selon une autre caractéristique, la carte à microcircuit comprend encore un matériau conducteur anisotropique disposé entre un moyen de contact et un plot de contact du module.

L'invention concerne encore un procédé de fabrication d'une carte à microcircuit comprenant les étapes suivante : fabrication d'au moins un moyen de contact, fabrication d'une antenne reliée au moyen de contact, fabrication d'un corps en plastique, comprenant l'antenne et ledit au moins un moyen de contact incrustés, usinage dans le corps d'un lamage au droit dudit au moins un moyen de contact de manière à rendre accessible, au moins partiellement, pour une connexion électrique ledit au moins un moyen de contact, mise en place dans le lamage d'un module comprenant au moins un plot de contact apte à venir en contact avec ledit au moins un moyen de contact, ledit au moins un moyen de contact comprenant un fil conducteur s'étendant entre une première extrémité solidaire de l'antenne et une deuxième extrémité libre, au moins une partie du fil conducteur est agencée en spirale centrifuge enroulée entre un centre relié à la première extrémité et un point éloigné du centre, le point éloigné étantrelié à la deuxième extrémité libre.

Selon une autre caractéristique, l'étape de mise en place comprend encore une étape d'insertion, entre un moyen de contact et un plot de contact du module, d'un matériau conducteur anisotropique.

D'autres caractéristiques, détails et avantages de l'invention ressortiront plus clairement de la description détaillée donnée ci-après à titre indicatif en relation avec des dessins sur lesquels :
- la figure 1 présente en vue de face une carte à microcircuit comprenant une antenne,
- la figure 2 présente en vue coupée selon A-A, la carte à microcircuit de la figure 1,
- la figure 3 présente en vue de face le détail d'un moyen de contact,
- la figure 4 présente en vue coupée selon B-B du moyen de contact de la figure 3,
- la figure 5 présente en vue coupée selon B-B du moyen de contact de la figure 3, avec un module mis en place.

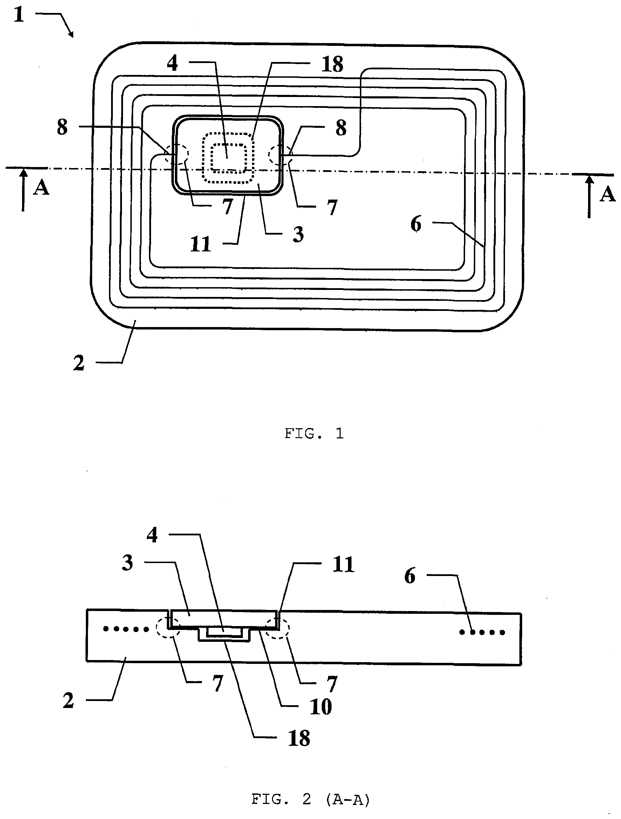

Une carte à microcircuit 1 selon l'art antérieur ou selon l'invention, telle que représentée aux figures 1 et 2, comprend un corps 2 en plastique. Ce corps 2 est une plaque de plastique mince, en ce que son épaisseur est négligeable par rapport à ses dimensions en largeur et en longueur.

Un tel corps 2 est réalisé par tout moyen. Un moyen classique est un laminage à chaud de couches plastiques. Les couches ont des fonctions diverses. Ainsi une couche interne centrale ou substrat peut être une couche de structure conférant au corps 2 et à la carte 1 sa rigidité. Des couches intermédiaires, de part et d'autre du substrat, peuvent comprendre des inscriptions ou décors à fonction informative ou décorative. Des couches externes, avantageusement transparentes, terminent typiquement l'empilage et réalisent en surface une protection des couches plus internes.

Selon un mode de réalisation une carte 1 comprenant une antenne 6, intègre une telle antenne 6 dans son corps 2. L'antenne 6 peut être préfabriquée sous forme d'une couche et insérée entre les autres couches avant l'opération de laminage. L'antenne 6 peut encore être déroulée et incrustée ou déposée sur une couche interne puis recouverte par les autres couches et ensuite laminée avec ces couches.

Dans le corps 2 est réalisé, de manière classique, un lamage 11, qui permet après fabrication du corps 2 de mettre en place un module 3. Le module 3 comprend un microcircuit 4 protubérant. Un lamage secondaire 18, réalisé dans le lamage 11, permet de laisser de la place pour le microcircuit 4.

L'antenne 6 peut consister en un enroulement. Elle comprend au moins une, typiquement deux, extrémité(s) qui doivent être reliées électriquement avec le microcircuit 4 par l'intermédiaire de plots de contact 16 disposés sur le module 3. A cet effet, un moyen de contact 7 permet de réaliser un contact électrique entre une extrémité de l'antenne 6 et le microcircuit 4. Pour cela au moins une partie du moyen de contact 7 débouche dans ledit lamage 11 et affleure une surface 10 du lamage 11, par exemple la surface 10 sur laquelle le module 3 vient en appui. Le moyen de contact 7 et le plot de contact 16 du module 3 sont disposés en regard de sorte à obtenir une zone de connexion électrique importante.

Lors de la réalisation du corps 2, le moyen de contact 7 est incrusté dans le corps 2 de telle manière à ce que ledit moyen de contact 7 vienne au moins partiellement aboutir dans le lamage 11, par exemple selon la surface 10 de fond dudit lamage 11. Le moyen de contact 7 est ainsi au moins partiellement accessible pour réaliser une connexion électrique. La réalisation du lamage 11, typiquement par usinage, le plus souvent par fraisage, en même temps qu'elle forme le lamage 11 apte à accueillir un module 3, va faire apparaître le moyen de contact 7. De plus, avantageusement, cette opération peut préparer ledit moyen de contact 7 en le décapant en surface afin de le débarrasser d'un éventuel matériau isolant ou d'une possible couche d'oxyde.

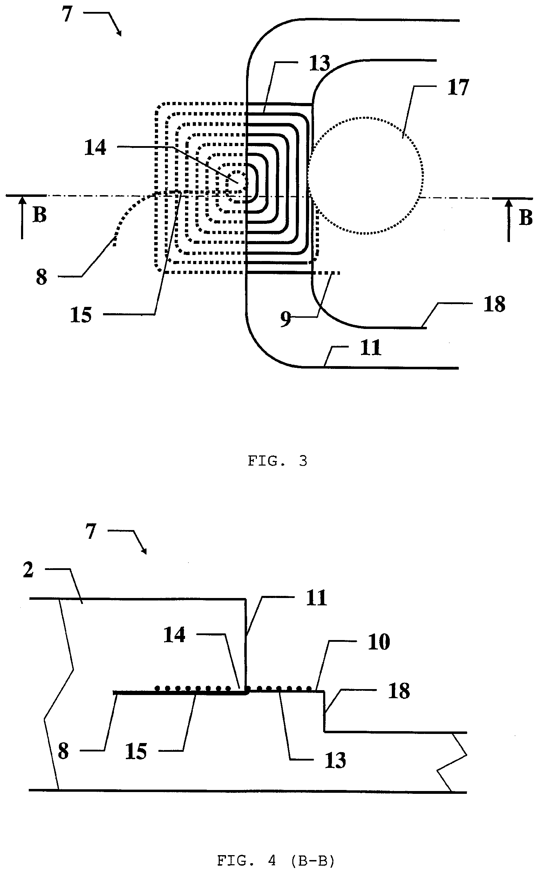

Les figures 3,4 illustrent un mode de réalisation selon l'invention d'un tel moyen de contact 7, respectivement en vue de face et en vue de profil coupée selon B-B. Selon une caractéristique de l'invention, ledit au moins un moyen de contact 7 comprend un fil conducteur. Le fil conducteur présente deux extrémités 8,9. La première 8 de ces extrémités est solidaire de l'antenne 6, la deuxième extrémité 9 est libre. Le fil conducteur compris entre la première extrémité 8 et la deuxième extrémité 9 est enroulée en forme de spirale 13 divergente. Cette spirale 13 est enroulée entre un centre de la spirale et un point éloigné du centre de la spirale de manière à ce que le centre 14 de la spirale soit directement relié à la première extrémité 8 et le point éloigné disposé à la périphérie de la spirale 13 soit directement relié à la deuxième extrémité 9. Le fil conducteur relie successivement la première extrémité 8, puis le centre 14, puis le point éloigné et enfin la deuxième extrémité libre 9. On entend par l'adverbe successivement, un ordre d'agencement défini par la séquence citée précédemment. Depuis ce centre 14, le fil conducteur s'enroule autour dudit centre 14, vers l'extérieur, en s'éloignant du centre, en une spirale comprenant plusieurs spires, jusqu'au point éloigné. La deuxième extrémité 9 est laissée libre. Sur les figures illustrées en annexe, le point éloigné de la spirale est confondu avec la deuxième extrémité 9. Ainsi, dans le sens allant de la première extrémité 8 à la deuxième extrémité 9, il est formé une spirale 13 centrifuge.

Comme plus particulièrement visible à la figure 4, le lamage 11 est formé dans le corps 2, afin de permettre d'accueillir un module 3. Le moyen de contact 7 est disposé relativement au lamage 11, de manière à ce que la spirale 13 affleure, au moins pour une partie de la spirale 13, une des surfaces du lamage 11. Avantageusement ladite surface peut être la surface 10 de fond du lamage 11. Dans le cas où deux lamages 11,18 sont présents, la spirale 13 affleure une surface du lamage 11, le plus large et le moins profond.

La spirale 13 se confond ainsi au moins en partie avec une surface 10 du lamage 11. Lorsque le lamage 11 est réalisé, la spirale 13 apparait et forme ainsi une surface conductrice, certes discontinue, mais présentant cependant une forte densité de fil/matériau conducteur. La forme en spirale permet en effet de placer, dans une surface réduite, une forte densité de matériau conducteur, relié à une extrémité de l'antenne 6 et ainsi de permettre d'assurer le contact entre cette extrémité de l'antenne 6 et le module 3.

Il peut arriver, par exemple lors de la réalisation du lamage 11, 18, qu'un usinage déborde et arrache une partie du moyen de contact 7. Ceci est illustré, à la figure 3 par le contour 17 qui figure, par exemple un profil de fraise. Ce contour 17 s'est ici trop approché du centre 14 de la spirale 13 dans le plan de la figure 3, ou s'est trop enfoncé, c'est-à-dire est descendu trop bas, dans le plan de la figure 4. Tel qu'illustré sur la figure 3, la spirale comporte un certain nombre de spires qui sont situées dans la zone du lamage 18 secondaire et qui sont arrachées lors de l'usinage du lamage secondaire. De plus lors de l'usinage du lamage 11, le contour 17 de la fraise se déplace parallèlement à la surface 10 du fond du lamage 11 et arrive en contact avec les pires les plus éloignées. Dans les deux cas, il en résulte une coupure des deux spires les plus externes de la spirale 13. Cependant la conformation en spirale centrifuge s'avère ici avantageuse en ce que toute la partie centrale de la spirale 13, et ici les cinq spires les plus internes, restent connectées électriquement avec la première extrémité 8 et ainsi avec l'extrémité de l'antenne 6. La conformation en spirale centrifuge permet ainsi de conserver une surface confortable de contact électrique possible.

Afin de faire affleurer la spirale 13 à la surface 10 du lamage 11, il convient de positionner ladite spirale 13 avec précision en profondeur dans le corps 2. Ceci est aisé car les épaisseurs respectives des couches situées au-dessus ou en-dessous du plan comprenant le moyen de contact 7 sont déterminées avec précision.

Il convient encore de réaliser l'usinage du lamage 11 avec une grande précision, principalement en profondeur. De manière indicative, un lamage 11, apte à accueillir un module 3, présente une forme sensiblement rectangulaire de dimension 13,2 x 12mm, pour une profondeur de 270µm. Une précision de l'ordre de +/-20µm est atteignable lors de la réalisation d'une opération de fraisage qui permette de former un lamage 11 avec une profondeur donnée, par exemple de 270µm. Le lamage secondaire 18 présente une forme sensiblement rectangulaire de dimension 8,5 x 7,3mm, pour une profondeur de 620µm relativement à la surface supérieure de la carte, soit une profondeur de 350 µm relativement au fond 10 du lamage 11.

Aussi, avec un fil conducteur composant le moyen de contact 7 présentant un diamètre compris entre 109 et 115µm de coeur conducteur en cuivre entouré d'un isolant d'épaisseur comprise entre 0,05 et 0,1 mm, dont on connait avec précision la profondeur d'incrustation dans le corps 2, il est possible de régler une profondeur d'usinage telle que ledit usinage vienne découvrir le fil conducteur en ôtant le plastique du corps 2 situé au-dessus, débarrasse le fil conducteur, le cas échéant, de son isolant, du côté où il fait face au module 3, et conserve une épaisseur satisfaisante de cuivre dans la spirale 13 afin de former le moyen de contact 7.

Selon une autre caractéristique avantageuse, une partie 15 du fil conducteur du moyen de contact 7 qui va de la première extrémité 8 jusqu'au centre 14 de la spirale 13 est préférentiellement disposée hors du lamage et sous la spirale 13, du côté opposé au côté où la spirale 13 affleure à la surface 10.

Ainsi, en se référant à la figure 4, en vue de profil, si la spirale 13 affleure à la surface 10 du lamage 11, la partie 15 de fil qui relie le centre 14 de la spirale 13 à la première extrémité 8 et ensuite à l'antenne 6 est placée au-delà du lamage, du côté de la spirale 13 opposé au côté qui est utilisé comme contact électrique. Ainsi dans la configuration illustrée, le lamage 11 et la spirale 13 font face vers le haut et la partie 15 est disposée sous la spirale 13. Il en résulte que la partie 15 est enfoncée plus profondément dans le corps 2. Ceci est avantageux en ce que l'opération d'usinage, qui creuse le lamage 11, rencontre ainsi d'abord la spirale 13, qui protège ainsi la partie 15 située en-dessous. Il n'y a ainsi aucun risque que l'usinage vienne sectionner le fil conducteur dans sa partie 15 amont.

La spirale 13 est avantageusement conformée pour épouser la surface 10 du lamage 11. Cette surface peut être disposée n'importe où dans le lamage 11 et présenter une forme quelconque. Ainsi la spirale 13 pourrait être disposée dans la surface arrondie formant le coin du lamage 13.

Selon un mode de réalisation préféré la spirale 13 est disposée sur la surface 10 de fond de lamage 11. Cette surface 10 est par exemple plane et la spirale 13 est alors pareillement conformée selon un plan.

La forme d'enroulement de la spirale 13 peut être quelconque. Un enroulement circulaire ou elliptique est ainsi possible. Un tel enroulement est avantageux en ce que, en l'absence d'angle, il permet de serrer les spires au plus près et ainsi de réaliser la plus forte densité de matériau conducteur.

Un enroulement rectangulaire, tel que représenté sur les figures est encore préféré. Un enroulement rectangulaire présente l'avantage de présenter, à l'outil d'usinage réalisant le lamage 11 et venant faire apparaitre et décaper le moyen de contact 7, un angle d'attaque beaucoup plus réduit. Il s'ensuit qu'un enroulement rectangulaire offre une meilleure résistance à l'arrachement du fil conducteur lors de l'usinage.

Relativement au dispositif de US2008/283615 qui propose un arrangement du fil conducteur en accordéon et ainsi des angles de pliage du fil conducteur à 180°, un enroulement rectangulaire réalise des pliages à 90°. Un enroulement en spirale rectangulaire permet ainsi de rapprocher le fil conducteur d'une spire à l'autre et ainsi d'obtenir une densité de matériau conducteur beaucoup plus importante.

Afin d'offrir une densité de matériau conducteur la plus grande possible, il est recherché une disposition des spires successives la plus serrée possible. Ainsi à titre indicatif, toujours avec un fil conducteur présentant une section utile de diamètre 120µm, l'interspire est la plus réduite possible et au moins inférieure à 200µm.

Selon un mode de réalisation, la spirale 13 peut être disposée de manière à être apparente totalement, sur toute sa surface et ainsi offrir une surface maximale de contact électrique potentiel.

Selon un mode de réalisation préféré, une partie de la spirale 13 est en partie noyée dans le corps 2. Ainsi tel qu'illustré, une partie de la spirale 13 affleure à la surface 10 et une autre partie de la spirale 13 est noyée dans le corps 2 dans le prolongement de ladite surface 10.

Le fait de noyer ainsi une partie de la spirale 13 dans le corps 2 entraîne un sertissage de la spirale 13 à l'interface entre la partie de la spirale visible et la partie de la spirale noyée qui confère une bonne résistance de la spirale 13 contre un éventuel arrachement lors de l'opération d'usinage.

Avantageusement, la partie de la spirale 13 noyée dans le corps 2 comprend le centre 14 de la spirale 13. Ceci a pour effet comme précédemment de protéger ledit centre 14 en le mettant à l'abri d'un arrachement.

Selon les modes de réalisation, le fait de disposer la partie 15 du moyen de contact 7 comprise entre la première extrémité 8 et le centre 14 de la spirale 13 sous la spirale 13 peut, du fait de l'épaisseur du fil conducteur dans cette partie 15, créer un « pli » légèrement en sur épaisseur dans les spires de la spirale 13 au niveau de leur intersection avec la partie 15. Ce « pli », en légère protubérance du côté opposé à la surface 10 et donc en direction de l'outil d'usinage du lamage 11 est préjudiciable en ce qu'il risquerait d'être cause d'arrachement ou de coupure des spires par l'outil. Aussi, avantageusement, la partie 15 de fil conducteur du moyen de contact 7 comprise entre la première extrémité 8 et le centre 14 de la spirale 13 est disposée dans la partie où la spirale 13 est noyée dans le corps 2. Le fait que la spirale 13 soit noyée, y compris son centre 14, garantit que la totalité de la partie 15 est ainsi protégée contre le risque d'arrachement.

A titre indicatif, pour un lamage 11 présentant des dimensions de 13,2 x 12 mm, la spirale 13 présente un rayon indicatif compris entre 1 et 4 mm. Ainsi la spirale 13 couvre avantageusement une surface suffisante pour assurer un bon contact électrique, et ce même si seulement la moitié de la spirale 13 est apparente. La largeur utile de la spirale 13 reste ainsi inférieure au diamètre d'une fraise classiquement utilisée de 4,2mm de diamètre. Ceci permet avantageusement de réaliser l'usinage qui fait apparaitre et décape superficiellement une spirale 13 en une seule passe de fraisage, ce qui est préférable, afin de limiter les risques d'arrachement. En cas de présence d'un lamage secondaire 18 de dimensions 8,5 x 7,3mm, centré sur le lamage 11, la largeur de la surface 10 est égale à 2,35mm. Dans ce cas le rayon de la spirale 13 est avantageusement égal à 2,35+0,8mm. La cote de 0,8mm est ici la distance minimale entre le bord du lamage 11 et le centre 14 noyé de la spirale 13, et donc la cote de noyage dudit centre 14. Ainsi la spirale 13 ne dépasse pas de la surface 10.

Il a été vu que le moyen de contact 7 est composé d'un fil conducteur. Selon un mode de réalisation, non obligatoire, l'antenne 6 est composée d'un fil conducteur. Ce fil conducteur est disposé dans le corps 2 et forme par exemple un enroulement, tel qu'illustré à la figure 2. Dans un tel cas, une extrémité de l'antenne peut avantageusement être confondue avec un moyen de contact 7. Il convient le cas échéant de prolonger le fil constituant l'antenne 6 pour disposer d'assez de longueur de fil conducteur pour réaliser la spirale 13 du moyen de contact 7. Le moyen de contact 7 est alors réalisé de matière et dans le prolongement de l'antenne 6.

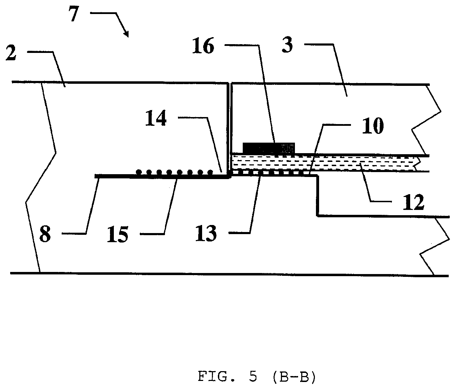

Selon une caractéristique avantageuse, plus particulièrement illustrée à la figure 5, le module 3 est inséré dans le lamage 11. Il est conçu pour, ce faisant, venir se connecter avec le moyen de contact 7 au niveau de la spirale 13 dans la partie où elle est apparente dans le lamage 11. Pour cela le module 3 comporte typiquement au moins un plot de contact 16 disposé en regard de la partie apparente de la spirale 13. Ce plot 16 est relié ou est directement confondu avec un plot de contact du microcircuit 4.

Avantageusement il est possible d'insérer entre un plot 16 d'un module 3 et une spirale 13 d'un moyen de contact 7, un matériau 12 apte à favoriser le contact. Un tel matériau 12 est conducteur électrique et est avantageusement élastique. Ainsi il est légèrement comprimé entre le moyen de contact 7 et le plot 16 par le module 3 mis en place dans le lamage 11. Un tel arrangement permet avantageusement de compenser une légère imprécision dimensionnelle et d'assurer malgré tout le contact électrique. Un tel matériau 12 peut ainsi être un adhésif conducteur.

Selon un mode de réalisation, le module 3 comprend au moins deux plots 16 disposés sur la même face du module 3, chacun en regard d'un moyen de contact 7 disposé sur la surface 10 du lamage 11. Dans ce cas il est avantageux d'employer une unique feuille 12, couvrant les dits au moins deux moyens de contact 7. Ladite feuille 12 est alors réalisée dans un matériau conducteur électrique anisotrope découpé. Un tel matériau conducteur électrique anisotrope 12 est conducteur, mais uniquement dans une direction, ici la direction reliant un plot 16 à un moyen de contact 7, soit la direction verticale sur les figures 4 et 5. Cette feuille de matériau conducteur anisotrope 12 est ainsi telle qu'elle réalise uniquement un contact électrique entre un plot 16 et un moyen de contact 7 en regard, mais pas de manière croisée.

Avantageusement encore, la feuille de matériau 12 peut être adhésive, le cas échéant double face, et ainsi contribuer à la fixation du module 3 dans le lamage 11.

L'invention concerne encore un procédé de fabrication d'une carte à microcircuit 1. Ce procédé comprend les étapes suivantes. Une première étape consiste à fabriquer un moyen de contact 7. Une autre étape consiste à fabriquer une antenne 6. Ladite antenne 6 comprend, typiquement à son extrémité au moins un moyen de contact 7 issu de l'étape précédente. Un corps 2 en plastique est ensuite fabriqué qui intègre en incrustation l'antenne 6 et ledit au moins un moyen de contact 7. Le moyen de contact 7 est incrusté dans le corps 2, dans lequel il est disposé de manière à venir affleurer à la position prévue pour le futur lamage 11.

Le procédé se poursuit par une opération d'usinage du corps 2 afin de réaliser un lamage 11. Ledit usinage est réalisé au droit dudit au moins un moyen de contact 7, et puisque le moyen de contact a été placé à dessein, l'usinage fait apparaître ledit au moins un moyen de contact 7. La carte à microcircuit 1 est alors dans la configuration de la figure 4. L'étape suivante peut réaliser la mise en place, dans le lamage 11 prévu à cet effet, d'un module 3. La configuration obtenue est alors celle de la figure 5. Le module 3 comprend un microcircuit 4 et est conformé de tel manière que le microcircuit 4, le cas échéant via le module 3, vienne en contact électrique avec chacun desdits au moins un moyen de contact 7.

Le procédé selon l'invention se caractérise par le fait que ledit au moins un moyen de contact 7 comprend un fil conducteur dont une première extrémité 8 est solidaire de l'antenne 6 et une deuxième extrémité 9 est enroulée en spirale 13 centrifuge.

Lors de l'étape de mise en place du module 3 dans le lamage 11, il est possible d'insérer, entre un moyen de contact 7 et le microcircuit 4, un matériau conducteur, avantageusement anisotropique 12.

## Revendications

1. Carte à microcircuit (1) comprenant un corps (2) en plastique, un module (3) comprenant un microcircuit (4), une antenne (6) incrustée dans le corps (2) reliée au microcircuit (4) par au moins un moyen de contact (7) , ***caractérisée en ce que*** ledit au moins un moyen de contact (7) comprend un fil conducteur s'étendant entre une première extrémité (8) solidaire de l'antenne (6) et une deuxième extrémité libre (9), au moins une partie du fil conducteur est agencée en spirale (13) centrifuge enroulée entre un centre (14), relié à la première extrémité (8), et un point éloigné du centre, le point éloigné étant relié à la deuxième extrémité libre (9).

2. Carte à microcircuit (1) selon la revendication **1,** comprenant encore un lamage (11) apte à accueillir le module (3), où la spirale (13) affleure, au moins partiellement, à une surface (10) du lamage (11).

3. Carte à microcircuit (1) selon la revendication 2, où la spirale (13) est en partie noyée dans le corps (2), préférentiellement de telle manière à ce que le centre (14) de la spirale (13) soit disposé au-delà du lamage (11) et soit noyé dans le corps (2) et qu'une partie du moyen de contact (7) soit accessible depuis le lamage (11).

4. Carte à microcircuit (1) selon la revendication **2 ou 3,** où une partie (15) du moyen de contact (7) comprise entre la première extrémité (8) et le centre (14) de la spirale (13) est disposée sous la spirale (13), au-delà du lamage (11).

5. Carte à microcircuit (1) selon la revendication **1** à **4,** où la spirale (13) est sensiblement plane et sensiblement rectangulaire.

6. Carte à microcircuit (1) selon l'une quelconque des revendications **1** à **5,** où l'antenne (6) est composée d'un fil conducteur et au moins une de ses extrémités se confond avec la première extrémité (8) du moyen de contact (7).

7. Carte à microcircuit (1) selon l'une quelconque des revendications **1** à **6,** comprenant encore un matériau conducteur anisotropique (12) disposé entre le moyen de contact (7) et un plot de contact (16) du module (3).

8. Procédé de fabrication d'une carte à microcircuit (1) comprenant les étapes suivante :
- fabrication d'au moins un moyen de contact (7),
- fabrication d'une antenne (6) reliée au moyen de contact (7),
- fabrication d'un corps (2) en plastique, comprenant l'antenne (6) et ledit au moins un moyen de contact (7) incrustés,
- usinage dans le corps (2) d'un lamage (11) au droit dudit au moins un moyen de contact (7) de manière à rendre accessible, au moins partiellement, pour une connexion électrique ledit au moins un moyen de contact (7),
- mise en place dans le lamage (11) d'un module (3) comprenant au moins un plot de contact (16) apte à venir en contact avec ledit au moins un moyen de contact (7),
***caractérisé en ce que*** ledit au moins un moyen de contact (7) comprend un fil conducteur s'étendant entre une première extrémité (8) solidaire de l'antenne (6) et une deuxième extrémité libre (9), au moins une partie du fil conducteur est agencée en spirale (13) centrifuge enroulée entre un centre (14) relié à la première extrémité (8) et un point éloigné du centre, le point éloigné étantrelié à la deuxième extrémité libre (9).

9. Procédé de fabrication selon la revendication 8, où l'étape de mise en place comprend encore une étape d'insertion, entre un moyen de contact (7) et un plot de contact (16) du module (3), d'un matériau conducteur anisotropique (12).

## Patentansprüche

1. Mikroschaltkreiskarte (1), umfassend einen Körper (2) aus Kunststoff, ein Modul (3), das einen Mikroschaltkreis (4) aufweist, eine Antenne (6), die in dem Körper (2) eingebettet ist, die mit dem Mikroschaltkreis (7) über mindestens ein Kontaktmittel (7) verbunden ist, **dadurch gekennzeichnet, dass** das mindestens eine Kontaktmittel (7) einen Leitungsdraht aufweist, der sich zwischen einem ersten Ende (8), das mit der Antenne (6) fest verbunden ist, und einem zweiten freien Ende (9) erstreckt, wenigstens ein Teil des Leitungsdrahtes als Spirale (13) angeordnet ist, die zwischen einer Mitte (14), die mit dem ersten Ende (8) verbundenen ist, und einem Punkt, der von der Mitte entfernt ist, zentrifugal aufgerollt ist, wobei der entfernte Punkt mit dem zweiten freien Ende (9) verbunden ist.

2. Mikroschaltkreiskarte (1) nach Anspruch 1, ferner umfassend eine Senkung (11), die dazu ausgelegt ist, das Modul (3) aufzunehmen, wobei die Spirale (13) mindestens teilweise bündig zu einer Oberfläche (10) der Senkung (11) ist.

3. Mikroschaltkreiskarte (1) nach Anspruch 2, wobei die Spirale (13) teilweise in den Körper (2) eingelassen ist, vorzugsweise derart, dass die Mitte (14) der Spirale (13) jenseits der Senkung (11) angeordnet ist und in den Körper (2) eingelassen ist und dass ein Teil des Kontaktmittels (7) von der Senkung (11) aus zugänglich ist.

4. Mikroschaltkreiskarte (1) nach Anspruch 2 oder 3, wobei ein Teil (15) des Kontaktmittels (7) zwischen dem ersten Ende (8) und der Mitte (14) der Spirale (13) unter der Spirale (13) jenseits der Senkung (11) angeordnet ist.

5. Mikroschaltkreiskarte (1) nach Anspruch 1 bis 4, wobei die Spirale (13) im Wesentlichen eben und im Wesentlichen rechteckig ist.

6. Mikroschaltkreiskarte (1) nach einem der Ansprüche 1 bis 5, wobei die Antenne (6) aus einem Leitungsdraht besteht und mindestens eines ihrer Enden mit dem ersten Ende (8) des Kontaktmittels (7) zusammenfällt.

7. Mikroschaltkreiskarte (1) nach einem der Ansprüche 1 bis 6, ferner umfassend ein anisotropisches leitendes Material (12), das zwischen dem Kontaktmittel (7) und einem Kontaktstück (16) des Moduls (3) angeordnet ist.

8. Verfahren zur Herstellung einer Mikroschaltkreiskarte (1), das die folgenden Schritte aufweist:
- Herstellen von mindestens einem Kontaktmittel (7),
- Herstellen von einer Antenne (6), die an das Kontaktmittel (7) angeschlossen wird,
- Herstellen von einem Körper (2) aus Kunststoff, der die Antenne (6) und das mindestens eine Kontaktmittel (7) eingebettet aufweist,
- Fräsen von einer Senkung (11) in den Körper (2) direkt an dem mindestens einen Kontaktmittel (7), derart, um das Kontaktmittel (7) mindestens teilweise für einen elektrischen Anschluss zugänglich zu machen,
- Anbringen eines Moduls (3) in der Senkung (11), das mindestens ein Kontaktstück (16) aufweist, das dazu ausgelegt ist, mit dem mindestens einen Kontaktmittel (7) in Kontakt zu kommen,
**dadurch gekennzeichnet, dass** das mindestens eine Kontaktmittel (7) einen Leitungsdraht aufweist, der sich zwischen einem ersten Ende (8), das mit der Antenne (6) fest verbunden ist, und einem zweiten freien Ende (9) erstreckt, mindestens ein Teil des Leitungsdrahtes als Spirale (13) angeordnet wird, die zwischen einer Mitte (14), die mit dem ersten Ende (8) verbundenen wird, und einem Punkt, der von dem Zentrum entfernt ist, zentrifugal aufgerollt wird, wobei der entfernte Punkt mit dem zweiten freien Ende (9) verbunden wird.

9. Verfahren zur Herstellung nach Anspruch 8, wobei der Schritt des Anbringens ferner einen Schritt des Einfügens eines anisotropischen leitenden Materials (12) zwischen einem Kontaktmittel (7) und einem Kontaktstück (16) des Moduls (3) aufweist.

## Claims

1. A microcircuit card (1) comprising a plastic body (2), a module (3) comprising a microcircuit (4), an antenna (6) inlaid in the body (2) connected to the microcircuit (4) by at least one contact means (7), ***characterized in that*** said at least one contact means (7) comprises a conductive wire extending between a first end (8) secured to the antenna (6) and a second free end (9), at least part of the conductive wire is arranged in a centrifugal spiral (13) wound between a center (14), connected to the first end (8), and a point distant from the center, the distant point being connected to the second free end (9).

2. The microcircuit card (1) according to claim **1,** further comprising a spot facing (11) able to accommodate the module (3), wherein the spiral (13) is at least partially flush with a surface (10) of the spot facing (11).

3. The microcircuit card (1) according to claim 2, wherein the spiral (13) is partially encapsulated in the body (2), preferably such that the center (14) of the spiral (13) is arranged beyond the spot facing (11) and is encapsulated in the body (2), and part of the contact means (7) is accessible from the spot facing (11).

4. The microcircuit card (1) according to claim 2 **or 3,** wherein part (15) of the contact means (7) comprised between the first end (8) and the center (14) of the spiral (13) is arranged below the spiral (13), past the spot facing (11).

5. The microcircuit card (1) according to claims **1** to **4,** wherein the spiral (13) is substantially planar and substantially rectangular.

6. The microcircuit card (1) according to any one of claims **1** to **5,** wherein the antenna (6) is made up of a conductive wire and at least one of its ends is combined with the first end (8) of the contact means (7).

7. A microcircuit card (1) according to any one of claims **1** to **6,** further comprising an anisotropic conductive material (12) arranged between the contact means (7) and a contact stud (16) of the module (3).

8. A method for manufacturing a microcircuit card (1) comprising the following steps:
- manufacturing at least one contact means (7),
- manufacturing an antenna (6) connected to the contact means (7),
- manufacturing a plastic body (2), comprising the antenna (6) and said at least one contact means (7) being inlaid,
- machining, in the body (2), a spot facing (11) at the level of said at least one contact means (7) so as to make said at least one contact means (7) at least partially accessible for electrical connection,
- placing, in the spot facing (11), a module (3) comprising at least one contact stud (16) able to come in contact with said at least one contact means (7),
***characterized in that*** said at least one contact means (7) comprises a conductive wire extending between a first end (8) secured to the antenna (6) and a second free end (9), at least part of the conductive wire being arranged in a centrifugal spiral (13) wound between a center (14) connected to the first end (8) and a point distant from the center, the distant point being connected to the second free end (9).

9. The manufacturing method according to claim 8, wherein the placing step further comprises a step for inserting an anisotropic conductive material (12) between a contact means (7) and a contact stud (16) of the module (3).
